Europäisches Patentamt

European Patent Office

Office européen des brevets

(11) Publication number: **0 184 102**
**B1**

(12) EUROPEAN PATENT SPECIFICATION

(45) Date of publication of patent specification: **25.04.90**

(51) Int. Cl.⁵: **F 02 B 67/04, F 16 H 59/06**

(21) Application number: **85114940.1**

(22) Date of filing: **26.11.85**

(54) Accessory drive device in engine.

(30) Priority: **30.11.84 JP 182908/84**

(43) Date of publication of application:
**11.06.86 Bulletin 86/24**

(45) Publication of the grant of the patent:
**25.04.90 Bulletin 90/17**

(84) Designated Contracting States:
**DE FR GB**

(56) References cited:
**GB-A-2 091 357**
**US-A-2 205 975**
**US-A-2 836 994**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Kaneyuki, Kazutoshi c/o MITSUBISHI DENKI K.K.**
**Himeji Works 840, Chiyodacho Himeji-shi Hyogo (JP)**

(74) Representative: **Eisenführ, Speiser & Strasse**
**Martinistrasse 24**
**D-2800 Bremen 1 (DE)**

Courier Press, Leamington Spa, England.

## Description

The invention relates to an accessory driving device for driving, for instance, an alternator, a cooling water pump, an air-conditioning compressor, utilizing power taken from an output shaft of an engine.

In an engine of an automobile or the like, accessories such as an alternator, a cooling water pump, an air-conditioning compressor, an oil pump for hydraulic servo steering are belt-driven by a crank pulley installed at top end of a crank shaft. Since the accessory drive is accompanied with large power loss during the high speed running of the engine, various methods have been proposed to limit the running speed of the accessory by changing the transmission ratio.

Fig. 2 illustrates an already proposed accessory drive device having such speed limiting function. Numeral 1 designates an input shaft directly coupled to a crank shaft of an engine (not shown), numeral 2 an input transmission member on the input shaft, and numeral 3 a cam device for generating pressure interposed between the input shaft 1 and the input transmission member 2. Numeral 4 designates a plurality of planetary cones, each composed of a frictional transmission surface 4a on a conical surface, a frictional transmission surface 4b on a bottom surface of the cone, and a frictional transmission surface 4c on a circumferential surface of a cone axial line. Numeral 5 designates a gear shifting ring which is engaged in frictional engagement with the frictional transmission surface 4a of the planetary cone 4 and moved in the axial direction so as to vary the frictional transmission radius of the planetary cone 4. Numeral 6 is a non-rotating orbit ring which is engaged in frictional engagement with the frictional transmission surface 4c of the planetary cone 4 and guides the revolution of the planetary cone 4 around the axial line of the input shaft 1. Numeral 7 designates an accessory drive pulley, numeral 7a a plurality of key grooves on inner circumferential surface of the pulley 7 in the axial direction, and numeral 8 a roller key which transmits the rotational force of the gear shifting ring 5 to the pulley 7, allows the movement in the axial direction and is engaged with the groove 7a. Numerals 9, 10 designate end plates to support the pulley 7 at both ends. Numeral 11 designates a stationary member which fixedly supports the orbit ring 6 and is fixed by a mounting part 11a to the stationary member of an engine (not shown). Numeral 12 designates frictional transmission oil which acts as medium for the frictional transmission and is filled in the space closed by the pulley 7, the end plates 9, 10 and the input shaft 1. Numeral 13 designates a centrifugal governor comprising a centrifugal weight, a spring plate 13a which supports the centrifugal weight and connects it to the gear shifting ring 5, and a weight 13b attached to the free end. Numeral 14 designates a return spring.

Operation of the accessory drive device will be described. The rotational force of the crank shaft of the engine is transmitted to the input shaft 1, thereby the input transmission member 2 rotates through the cam device 3. The planetary cone 4 performs self-rotation about its own axial center, and at the same time performs the revolution around the axial center of the input shaft 1 along the frictional transmission surface of the orbit ring 6 being the stationary element. The gear shifting ring 5 engaged in frictional engagement with the frictional transmission surface 4a of the planetary cone 4 is rotated around the axial center of the input shaft 1 on the basis of the differential action between the self-rotation and the revolution of the planetary cone 4 and the transmission radius ratio, and drives the pulley 7 through the roller key 8. The rotational speed ratio between the input shaft 1 and the gear shifting ring 5 can be arbitrarily set by moving the gear shifting ring 5 in the axial direction so that the effective radius ratio of the frictional transmission between the input shaft 1 and the gear shifting ring 5 is varied. For example, if the gear shifting ring 5 is engaged in frictional engagement at large diameter side of the planetary cone 4, the rotational speed ratio becomes 1:1, and at small diameter side, i.e., near vertex of the cone, the rotational speed ratio becomes 1:0.4, thus reduction at side of the transmission ring 5 can be selected in nonstage state. The centrifugal governor 13 controls the axial position of the gear shifting ring 5, and automatically controls the rotational speed of the pulley 7 to the speed ratio 1:1 at low speed state of the engine and to the nearly constant rotational speed when the engine is at intermediate or high speed state. The frictional transmission oil 12 is interposed in the frictional transmission surface and acts as medium for the frictional transmission force and performs lubrication and cooling in the contacting surface and the bearing.

The accessory drive device utilizing the nonstage transmission with the planetary mechanism of frictional transmission type as above described has small size and large transmission capacity. However, the frictional transmission coefficient varies depending on temperature of the frictional transmission oil as medium of the frictional transmission, and limitation of the transmission capacity and the transmission efficiency are significantly affected. In general, relation between temperature of the frictional transmission oil and the frictional transmission coefficient and between limitation of the transmission capacity of such transmission and the transmission efficiency is apt to decrease if the temperature of the frictional transmission rises. While the engine in the automobile becomes small size and light weight, since the engine room is narrowed in order to obtain the high output and enlarge the dwelling space of the car room, temperature within the engine room rises and hence temperature of the frictional transmission oil of the accessory drive device rises, thereby the device must be of large size to compensate the decrease of the transmission capacity and the transmission efficiency is decreased.

From GB—A—2 091 357 it is already known to use a variable transmission for driving accessories. This known transmission provides three gear ranges comprising a combination of planetary gears providing a low gear ratio and a high gear ratio, as well as an immediate gear ratio working with a progressively controlled friction brake.

From US—A—2 836 994 a planetary cone friction transmission system having an infinitely variable transmission ratio is known, which transmission system is intended as a main drive, i.e. for driving a load at infinitely variable speeds from an engine having substantially constant speed. The known transmission system comprises support means; a driven member supported for rotation about its axis by said support means; a deformable friction ring coaxial with said driven member and operatively connected to the latter for transmitting a drive thereto when said friction ring rotates about its axis; a plurality of conical planetary rollers distributed about the axis of said driven member, and being surrounded by and engaging said friction ring; a plurality of bearing means respectively supporting said planetary rollers for respective free rotation about their axes and for respective free movement along their axes under the action of centrifugal force so that when said planetary rollers rotate about the axis of said driven member they will press against said friction ring due to the centrifugal force acting on said rollers; a drive shaft coaxial with said driven shaft and also supported for rotation about its axis by said support means; and turning means cooperating with said drive shaft and said rollers for turning the latter respectively about their axes and simultaneously about the drive shaft axis when said shaft rotates, so that the drive from said drive shaft will be transmitted through said rollers to said friction ring and from the latter to said driven member.

It is an object of the present invention to provide an accessory drive using a planetary cone gear transmission in which the temperature rise of the frictional transmission oil is decreased, and which is of small size and has a good transmission efficiency.

According to the invention the accessory driving device is structured as defined in claim 1.

Preferable embodiments of the invention are defined in the dependent claims.

Fig. 1 is a side view of an accessory drive device of an engine according to the invention, partly cut away for showing inside thereof; and

Fig. 2 is a side view, partly cut away, of a conventional accessory drive device of an engine of internal prior art, not pre-published.

An embodiment of the invention will now be described referring to the accompanying drawings.

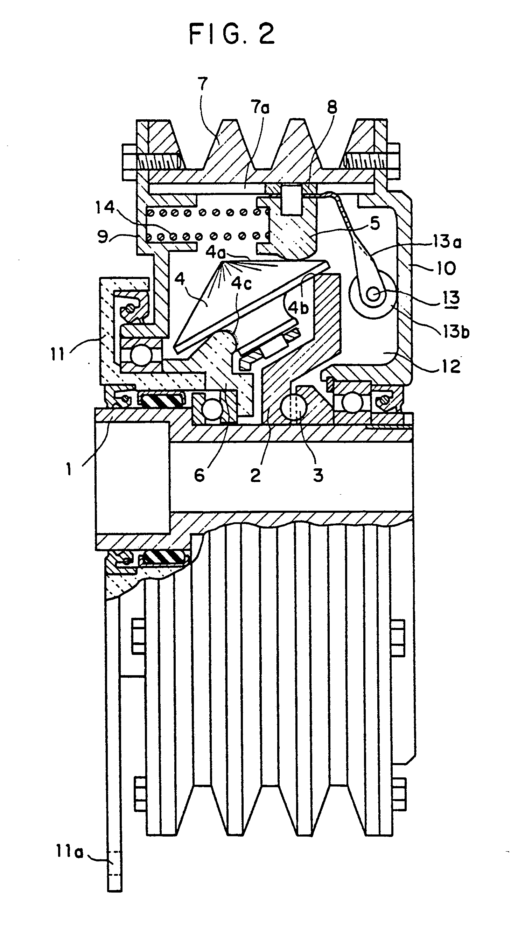

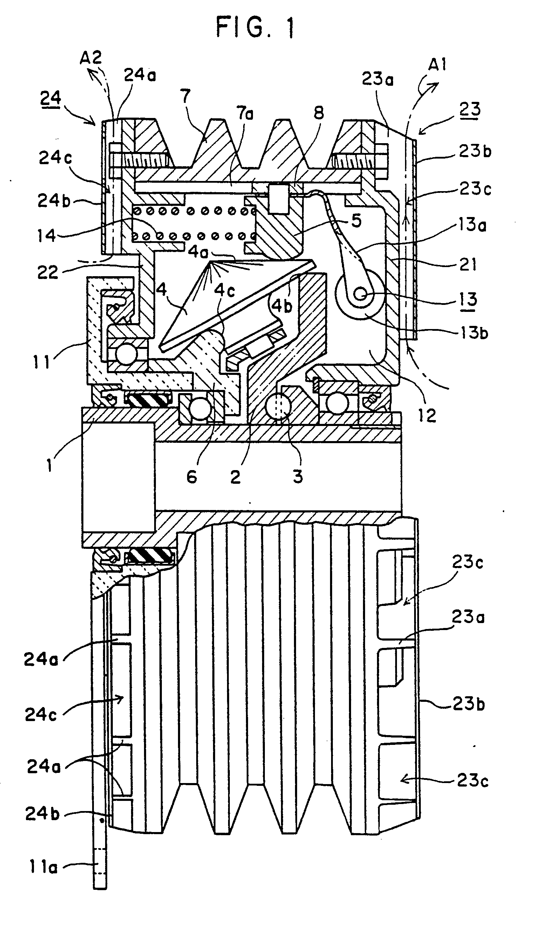

In Fig. 1, reference numeral 1 designates an input shaft, numeral 2 an input transmission member on the input shaft, and numeral 3 a cam device for generating pressure interposed between the input shaft 1 and the input transmission member 2. Numeral 4 designates a plurality of planetary cones, each composed of a frictional transmission surface 4a on a conical surface, a frictional transmission surface 4b on a bottom surface of the cone, and a frictional transmission surface 4c on a circumferential surface of the cone axial center. Numeral 5 designates a gear shifting ring which is engaged in frictional engagement with the frictional transmission surface 4a of the planetary cone 4 and moved in the axial direction so as to vary the frictional transmission ratio, and numeral 6 an orbit ring which guides the revolution of the planetary cone 4 around the axial line of the input shaft 1. Numeral 7 designates an accessory drive pulley, numeral 7a a plurality of key grooves on inner circumferential surface of the pulley 7 in the axial direction, and numeral 8 a roller key which transmits the rotational force of the gear shifting ring 5 to the pulley 7 and suppresses the movement in the axial direction and is engaged with the key groove 7a. Numeral 11 designates a stationary member which is fixed by a mounting part 11a to a stationary member of the engine (not shown). Numeral 12 designates a frictional transmission oil acting as medium for the frictional transmission, numeral 13 a centrifugal governor comprising a spring plate 13a and a weight 13b, and numeral 14 a return spring. Constitution and function of these elements are shown in Fig. 2 and substantially the same as that used in the device of the internal prior art already described, and the detailed description shall be omitted here.

In order to support the pulley 7 rotatably on the input shaft 1, end plates 21 and 22 installed to both ends of the pulley 7 are provided with cooling fans 23 and 24 respectively. The cooling fan 23 installed to one end plate 21 positioned on the right side in Fig. 1 comprises a plurality of fan blades 23a formed at outside surface of the end plate 21 and extending in the radial direction, and a disc 23b installed abutting on top portion of the fan blades 23a and having a hole at the center. In this constitution, a plurality of air passages 23c extending in the radial direction are formed on outside surface of the end plate 21, and one end of each air passage 23c is opened at position near the rotation center and other end thereof is opened at position remote from the rotation center. While each fan blade 23a is rotated at high speed together with the pulley 8, air in each passage 23c flows in the radial direction as shown in arrow A1 by means of the centrifugal force.

Other cooling fan 24 formed on the end plate 22 has similar function to that of the cooling fan 23 as above described, and comprises a plurality of fan blades 24a and an annular disc 24b, thereby air passages 24c are constituted so that air flows in direction shown by arrow A2 during the rotation.

As clearly seen from above-mentioned constitution, heat stored within the frictional transmission oil 12 contained in the closed space is transferred through the wall of the end plates 21, 22 to air within the passages 23c, 24c and discharged to the outside according to the air flow. The fan blades 23a, 24a serve to enlarge the effective area for the heat transfer between the end plates 21, 22 and the air.

Consequently, since temperature rise of the frictional transmission oil 12 can be reduced and decrease of the frictional transmission coefficient be prevented, prescribed transmission capacity can be exhibited and operation at high transmission efficiency be maintained. In this case, although consumption power required to drive the forced cooling fans 20, 21 becomes the loss in the device, increase of the transmission efficiency due to the temperature reduction of the transmission oil is large and the loss in the cooling fans is insignificant.

As above described, according to the invention, the cooling fans having also the radiating fin effect are installed integrally with the end plates of the accessory drive device utilizing the nonstage transmission with the planetary mechanism in frictional transmission system, thereby the temperature rise of the frictional transmission oil can be reduced and the accessory drive device of the engine having small size and good transmission efficiency can be obtained.

**Claims**

1. An accessory driving device for driving, for instance, an alternator, a cooling water pump, an air-conditioning compressor, utilizing power taken from an output shaft of an engine, said device comprising: an input shaft (1) rotatably supported on a stationary support member (11) and driven by said engine output shaft and rotated at the same rotational speed; a transmission output member (7) rotatably supported on said input shaft (1) and transmitting the power to said accessory; planetary cone members (4) rotatably mounted around said input shaft (1) and in self-rotation around an axis inclined with respect to the axis of the input shaft (1), each of said planetary cone members (4) having a first part with a surface of nearly conical shape coaxial to the inclined axis and with a bottom surface radial to the inclined axis, and a second part in the form of a shaft with a circumferential surface coaxial to the inclined axis and connected with the bottom surface of the first part, and first, second and third frictional transmission surfaces (4a, 4b, 4c) being formed on the conical surface of the first part, the bottom surface of the first part and the circumferential surface of the second part, respectively; an input transmission member (2) installed on and rotatable with said input shaft (1) and being with its outer circular periphery in frictional engagement with the second frictional transmission surface (4b) of said planetary cone members (4); said stationary support member (11) having a part of nearly cylindrical shape with a center hole through which said input shaft (1) passes and being arranged in coaxial relation to said input shaft (1); an orbit ring (6) fixedly supported by said stationary support member (11), said orbit ring (6) provided in the revolution path of said planetary cone members (4) and having an annular frictional engaging surface to be engaged in frictional engagement with the third frictional transmission surface (4c) of said planetary cone members (4); a shifting ring (5) supported on said transmission output member (7) and movable only in the axial direction thereof and having a frictional engaging surface engaged in frictional engagement with the first frictional transmission surface (4a) of said planetary cone members (4) always within the movable region in the axial direction; a transmission ratio varying member (13) varying the position of said shifting ring (5) in a direction to get near or away with respect to the rotation centers of said planetary cone members (4) in response to the rotational speed of said transmission output member (7) and suppressing the rise of the rotational speed of said transmission output member (7) in the range of the rotational speed of said input shaft (1) larger than a prescribed value; said transmission output member (7) having two end plate members (21, 22) positioned on both ends thereof, said transmission output member (7) with the end plate members (21, 22) together with said input shaft (1) constituting an annular closed room filled with frictional transmission oil (12); and cooling fans (23, 24) are installed on said end plate members (21, 22), respectively, which rotate with the transmission output member (7).

2. A device as set forth in claim 1, wherein each cooling fan (23, 24) comprises a plurality of fan blades (23a, 24a) formed at outside surfaces of the end plate members (21, 22) and extending in the radial direction, and an annular disc (23b, 24b) installed abutting on top portion of said fan blades (23a, 24a).

3. A device as set forth in claim 2, wherein said fan blades (23a, 24a) are formed integrally with said end plate members (21, 22).

**Patentansprüche**

1. Hilfsantriebsvorrichtung zum Antreiben eines Hilfsaggregats, z.B. eines Wechselstromgenerators, einer Kühlwasserpumpe, und/oder eines Klimaanlagen-Kompressors, mittels Antriebsleistung von der Ausgangswelle eines Motors; mit einer an einem stationären Teil (11) drehbar gelagerten Eingangswelle (1), die durch die Ausgangswelle des Motors mit gleicher Drehzahl angetrieben wird; mit einem Getriebeausgangsteil (7), das drehbar auf der Eingangswelle (1) gelagert ist und Leistung an das Hilfsaggregat überträgt; mit Planetenkegelrädern (4), die drehbar um die Eingangswelle (1) und in Selbstdrehung um eine gegenüber der Achse der Eingangswelle (1) geneigten Achse angeordnet sind, wobei jedes der Planetenkegelräder (4) einen ersten Bereich mit einer etwa konischen Fläche koaxial zu der geneigten Achse und mit einer Bodenfläche radial zu der geneigten Achse, einen zweiten Bereich in der Form einer Welle mit einer zur geneigten Achse koaxialen Umfangsfläche, die mit der Bodenfläche des ersten Bereiches verbunden ist, sowie eine erste, eine zweite und eine dritte Reibungsübertragungsfläche (4a, 4b, 4c) auf der konischen Fläche des ersten Bereiches, auf der Bodenfläche des ersen Bereiches bzw. auf der Umfangsfläche des zweiten Bereiches aufweist; mit einem Eingangstriebeglied (2), das auf der Eingangswelle (1) drehbar gelagert ist und mit seinem äußeren Umfang reibungsschlüssig an der zweiten Reibungsübertragungsfläche (4b) der Planetenkegelräder (4) angreift; wobei das stationäre Teil (11) ein Teil mit etwa zylindrischer Form und einer Zentralbohrung aufweist, durch die die Eingangswelle (1) hindurchgeführt ist und die koaxial zur Eingangswelle (1) angeordnet ist; mit einem Orbitring (6), der an dem stationären Stützring (11) befestigt und im Umlaufpfad der Planetenkegelräder (4) angeordnet ist, und der eine ringförmige Reibungsangriffsfläche hat, die reibungsschlüssig an der dritten Reibungsübertragungsfläche (4c) der Planetenkegelräder angreift; mit einem Verstellring (5), der auf dem Getriebeausgangsteil (7) gelagert ist, nur in dessen Axialrichtung beweglich ist und eine Reibungsangriffsfläche hat, die reibungsschlüssig an der ersten Reibungsübertragungsfläche (4a) der Planetenkegelräder (4) innerhalb des axialen Bewegungsbereiches angreift; mit einem Übersetzungsverhältnis-Verstellglied (13), das die Position des Verstellringes (5) in Richtung auf die Rotationszentren der Planetenkegelräder (4) und von diesen fort abhängig von der Drehzahl des Geriebeausgangsteils (7) verstellt und einem Anstieg der Drehzahl des Getriebeausgangsteils (7) entgegenwirkt, wenn im Drehzahlbereich der Eingangswelle (1) ein vorbestimmter Wert überschritten wird; wobei das Getriebeausgangsteil (7) an beiden Enden mit Endplatten (21, 22) versehen ist und zusammen mit diesen und der Eingangswelle (1) einen geschlossenen Ringraum bildet, der mit Reibungsgetriebeöl (12) gefüllt ist; und mit Kühlflügeln (23, 24), die an den Endplatten (21, 22) angeordnet sind und zusammen mit dem Getriebeausgangsteil (7) umlaufen.

2. Hilfsantriebsvorrichtung nach Anspruch 1, dadurch gekennzeichnet, daß jeder Kühlflügel (23, 24) mehrere Kühlflügelblätter (23a, 24a) aufweist, die an den Außenflächen der Endplatten (21, 22) angeordnet sind und sich in radialer Richtung erstrecken, und daß an den Endbereichen der Kühlflügelblätter (23a, 24a) eine Ringscheibe (23b, 24b) angeordnet ist.

3. Hilfsantriebsvorrichtung nach Anspruch 2, dadurch gekennzeichnet, daß die Kühlflügelblätter (23a, 24a) an den Endplatten (21, 22) integral angeformt sind.

## Revendications

1. Dispositif d'entraînement d'organe auxiliaire destiné à entraîner, par exemple, un alternateur, une pompe à eau de refroidissement, un compresseur de conditionnement d'air, en utilisant une énergie tirée d'un arbre secondaire d'un moteur à combustion interne, ledit dispositif comportant:

— un arbre primaire (1) monté rotatif sur un élément d'appui fixe (11) et entraîne par ledit arbre secondaire du moteur à combustion interne pour tourner à la même vitesse de rotation;

— un élément de transmission secondaire (7) monté rotatif sur ledit arbre primaire (1) et qui transmet l'énergie audit organe auxiliaire;

— des éléments formant cônes planétaires (4) montés rotatifs autour dudit arbre primaire (1) et en rotation sur eux-mêmes autour d'un axe incliné par rapport à l'axe de l'arbre primaire (1), chacun desdits éléments formant cônes planétaires (4) possédant une première partie qui présente une surface de forme à peu près conique, coaxiale avec l'axe incliné et une surface inférieure radiale par rapport à l'axe incliné, et une seconde partie sous la forme d'un arbre qui possède une surface circonférentielle coaxiale avec l'axe incliné et reliée à la surface inférieure de la première partie, des première, seconde et troisième surfaces·de transmission à frottement (4a, 4b, 4c) étant respectivement définies sur la surface conique de la première partie, sur la surface inférieure de cette dernière et sur la surface circonférentielle de la seconde partie;

— un élément de transmission primaire (2) monté sur ledit arbre primaire (1) et apte à tourner conjointement avec celui-ci, tout en étant, par sa périphérie circulaire extérieure, en contact à frottement avec la seconde surface de transmission à frottement (4b) desdits éléments formant cônes planétaires (4);

— ledit élément d'appui fixe (11) possédant une partie de forme à peu près cylindrique pourvue d'un trou central à travers lequel passe ledit arbre primaire (1), et étant disposé dans une relation coaxiale avec ledit arbre primaire (1);

— une couronne orbitale (6) montée fixe sur ledit élément d'appui fixe (11), laquelle couronne orbitale (6) est prévue dans la trajectoire de révolution desdits éléments formant cônes planétaires (4) et présente une surface de contact à frottement annulaire destinée à être en contact à frottement avec la troisième surface de transmission à frottement (4c) desdits éléments formant cônes planétaires (4);

— un anneau de déplacement (5) monté sur ledit élément de transmission secondaire (7) en étant mobile uniquement dans la direction axiale de celui-ci, et qui présente une surface de contact à frottement en contact à frottement avec la première surface de transmission à frottement (4a) desdits éléments formant cônes planétaires (4), et ce, toujours dans les limites de la zone mobile dans la direction axiale;

— un élément variateur de rapport de transmission (13) qui fait varier la position dudit anneau de déplacement (5) dans une direction propre à le rapprocher ou à l'éloigner par rapport aux centres de rotation desdits éléments formant cônes planétaires (4), en réponse à la vitesse de rotation dudit élément de transmission secondaire (7), et qui supprime l'augmentation de la vitesse de rotation dudit élément de transmission secondaire (7) dans la plage de la vitesse de rotation dudit arbre primaire (1) supérieure à une valeur prescrite;

— ledit élément de transmission secondaire (7) comportant deux organes formant plaques d'extrémité (21, 22) placés sur ses deux extrémités, et cet élément de transmission secondaire (7) pourvu des organes formant plaques d'extrémité (21, 22) formant, conjointement avec ledit arbre primaire (1), une chambre annulaire fermée remplie d'une certaine quantité d'huile de transmission à frottement (12); tandis que sont respectivement installés sur lesdits organes formant plaques d'extrémité (21, 22), des ventilateurs de refroidissement (23, 24) qui tournent conjointement avec l'élément de transmission secondaire (7).

2. Dispositif tel que défini dans la revendication 1, dans lequel chacun des ventilateurs de refroidissement (23, 24) comporte une série de pales de ventilateurs (23a, 24a) définies au niveau de surfaces extérieures des organes formant plaques d'extrémité (21, 22) et qui s'étendent dans la direction radiale, et un disque annulaire (23b, 24b) installé en butée contre une partie supérieure desdites pales de ventilateur (23a, 24a).

3. Dispositif tel que défini dans la revendication 2, dans lequel lesdites pales de ventilateur (23a, 24a) sont formées solidairement avec lesdits organes formant plaques d'extrémité (21, 22).

# FIG. 2

# FIG. 1